Europäisches Patentamt

European Patent Office

Office européen des brevets

(11) Numéro de publication : **0 293 315 B1**

# (12) FASCICULE DE BREVET EUROPEEN

(45) Date de publication du fascicule du brevet :
**18.03.92 Bulletin 92/12**

(51) Int. Cl.⁵ : **H04L 12/54**

(21) Numéro de dépôt : **88460007.3**

(22) Date de dépôt : **26.04.88**

(54) **Système et méthode de contrôle de flux de paquets.**

(30) Priorité : **26.05.87 FR 8707555**

(43) Date de publication de la demande :
**30.11.88 Bulletin 88/48**

(45) Mention de la délivrance du brevet :
**18.03.92 Bulletin 92/12**

(84) Etats contractants désignés :
**BE DE ES GB IT NL SE**

(56) Documents cités :
**GB-A- 2 001 227**
**PATENT ABSTRACTS OF JAPAN, vol. 6, no. 103 (E-112)[981], 12 juin 1982, page 139 E 112; & JP-A-57 35 449**
**COMPUTER NETWORKS AND ISDN SYSTEMS, vol. 11, no. 1, janvier 1986, pages 43-58, Elsevier Science Publishers B.V., Amsterdam, NL; R. VARAKULSIRIPUNTH et al.: "A congestion-control policy on the internetwork Gateway"**
**PATENT ABSTRACTS OF JAPAN, vol. 8, no. 231 (E-274)[1668], 24 octobre 1984, page 10 E 274; & JP-A-59 111 493**

(73) Titulaire : **FRANCE TELECOM, CNET (Centre National d'Etudes des Télécommunications) 38-40, rue du Général Leclerc F-92131 ISSY LES MOULINEAUX (FR)**

(72) Inventeur : **Quinquis, Jean-Paul Rue de Cornic F-22700 Perros-Guirec (FR)**
Inventeur : **Servel, Michel Le Rhu en Servel F-22300 Lannion (FR)**
Inventeur : **Francois, Joel Prat Cotel Bihan, Saint Quay Perros F-22700 Perros-Guirec (FR)**

(74) Mandataire : **Le Guen, Louis François Cabinet Louis Le Guen 38, rue Levavasseur B.P. 91 F-35802 Dinard Cédex (FR)**

## Description

La présente invention concerne un système de contrôle des flux de paquets portés par des multiplex temporels asynchrones.

L'acheminement de débits quelconques et le partage des mêmes ressources de transmission constituent l'intérêt principal de la technique temporelle asynchrone. En effet, le multiplexage temporel asynchrone permet de transmettre sur un même support, c'est-à-dire le multiplex temporel asynchrone, des paquets appartenant à ces circuits virtuels différents. Chaque paquet est constitué d'une étiquette identifiant le circuit virtuel auquel il appartient et d'un bloc d'information. Le nombre maximal de circuits virtuels sur un multiplex est déterminé par la longueur en bits de l'étiquette.

Toutefois, l'allocation de ces ressources s'appuie généralement sur des statistiques des taux d'activité des différentes sources émettrices si bien qu'il y a un risque non nul de pertes d'informations par débordement des files d'attente dû à des surcharges instantanées. Il faut évidemment minimiser ces pertes, mais la solution n'est pas facile car les flux délivrés par les différentes sources sont de caractère discontinu et sont sporadiques.

Un objet de la présente invention consiste à prévoir une méthode permettant d'améliorer, en temps réel, la gestion des débits. Selon cette méthode, on surveille l'écoulement des flux d'un, d'une pluralité ou de tous les circuits virtuels établis sur un ou l'ensemble des multiplex temporels d'entrée d'un commutateur afin d'interdire les engorgements et les saturations des ressources du réseau provoqués par des surcharges consécutives soit à une anomalie de fonctionnement, soit au non-respect du seuil de débit pour lequel une ou chaque communication a été établie.

Suivant l'invention, la méthode consiste à mesurer le débit en paquets de chaque communication et, quand il est trouvé supérieur à un débit seuil maximal, appelé débit crête, à déclencher une signalisation qui provoque l'élimination des paquets appartenant à la communication concernée qui sont en trop par rapport à ce débit crête, avant qu'ils ne soient pris en charge par l'organe de commutation.

La valeur d'un débit-crête est propre à chaque communication et est fixée au cours de l'établissement de la communication, en accord avec l'organe de commande de celle-ci, c'est-à-dire l'unité de commande du réseau:

    – par l'usager, dans le cas où la source qu'il insère dans le réseau a un débit variable et quand il connaît la valeur maximale du débit de cette source, ou

    – par l'unité de commande du réseau, dans le cas de sources à débits constants ou de sources à débits variables dont ladite unité peut prédéterminer les valeurs moyennes et maximales.

Suivant l'invention, la signalisation mentionnée ci-dessus peut être exploitée par les organes de commande du commutateur qui émettent vers la source de la communication concernée un message lui demandant de réduire son débit, quand cela est possible, et, en tout état de cause, un message l'avertissant d'une perte de paquets.

Suivant une autre caractéristique de l'invention, il est prévu un compteur-décompteur dont l'entrée de décomptage reçoit des impulsions au rythme du débit-crête alloué à la communication concernée et dont l'entrée de comptage reçoit une impulsion à la transmission de chaque paquet appartenant à la communication concernée, la sortie de comptage maximal du compteur-décompteur délivrant, quand elle est activée, ladite signalisation.

Suivant une autre caractéristique, ledit compteur-décompteur se décompose en un premier registre-mémoire, un second registre-mémoire, un additionneur incrémenteur, un compteur, un premier soustracteur, un second soustracteur et un circuit de détection de valeur maximale, l'entrée du compteur recevant des impulsions au rythme du débit-crête alloué à la communication concernée et la sortie du compteur étant reliée, d'une part, à l'entrée de chargement du premier registre-compteur et à la première entrée d'opérande du premier soustracteur dont l'autre entrée d'opérande est reliée à la sortie du premier registre-compteur, l'entrée de l'additionneur étant reliée à la sortie du second registre-mémoire, les sorties de l'additionneur et du premier soustracteur étant reliées aux entrées d'opérande du second soustracteur dont la sortie est reliée à l'entrée de chargement du second registre-mémoire et à l'entrée du circuit de détection de valeur maximale dont la sortie délivre ladite signalisation, chaque transmission d'un paquet appartenant à ladite communication concernée déclenchant le transfert des contenus du compteur et du premier registre-mémoire aux entrées d'opérande du premier soustracteur, le transfert du contenu du second registre-mémoire dans l'additionneur, puis le transfert des contenus de l'additionneur et du premier soustracteur aux entrées d'opérande du second soustracteur, et, enfin, les chargements des premier et second registres-mémoires, une fois la seconde soustraction effectuée.

Suivant une autre caractéristique, ledit compteur-décompteur est associé à un circuit de réception de l'identité de chaque paquet entrant dans un commutateur de paquets portés par des multiplex temporels asynchrones, à une mémoire contenant autant de messages que d'identités de communications établies à travers le commutateur, lesdites identités constituant les adresses de ladite mémoire, chaque message étant formé de plusieurs mots, dont deux servent de premier et second registres-mémoires dudit compteur-décompteur, une base de temps contenant une pluralité de compteurs, un sélecteur pour commuter sélectivement une sortie d'un desdits compteurs à la première entrée d'opérande du premier soustracteur, chaque message contenant un troisième mot servant à effectuer ladite sélection.

Suivant une autre caractéristique, le compteur-décompteur comprend encore un diviseur à rapport de division sélectable entre la sortie du premier soustracteur et l'entrée d'opérande correspondante du second soustracteur, chaque message de ladite mémoire contenant un quatrième mot définissant le rapport de division du diviseur.

Les caractéristiques de l'invention mentionnées ci-dessus, ainsi que d'autres, apparaîtront plus clairement à la lecture de la description d'un exemple de réalisation de l'invention, ladite description étant faite en relation avec les dessins joints, parmi lesquels:

la Fig. 1 est un bloc-diagramme montrant un premier exemple de réalisation d'un circuit de gestion de débit associé à un commutateur de paquet,

les Figs. 2a à 2c sont des diagrammes temporels illustrant le fonctionnement du circuit de la Fig. 1,

les Figs. 3a et 3b sont des courbes illustrant d'une autre manière le fonctionnement du circuit de la Fig. 1,

la Fig. 4 montre le bloc-diagramme d'un second exemple de réalisation de circuit de gestion de débit, plus complet que celui de la Fig. 1,

la Fig. 5 est le schéma-bloc du module de gestion utilisé dans le circuit de la Fig. 4,

la Fig. 6 illustre la structure d'un message de la mémoire utilisée dans le module de la Fig. 6,

la Fig. 7 est le schéma-bloc de la base de temps du circuit de la Fig. 4,

la Fig. 8 est le schéma du générateur d'impulsions de la base de temps de la Fig. 7,

les Figs. 9.1 à 9.10 sont des diagrammes de temps illustrant des signaux engendrés dans la base de temps de la Fig. 7,

les Figs. 10.1 à 10.4 sont des diagrammes temporels d'autres signaux engendrés dans les circuits des Figs. 7 et 8, et

la Fig. 11 montre des diagrammes temporels illustrant des cycles de fonctionnement du module de la Fig. 5.

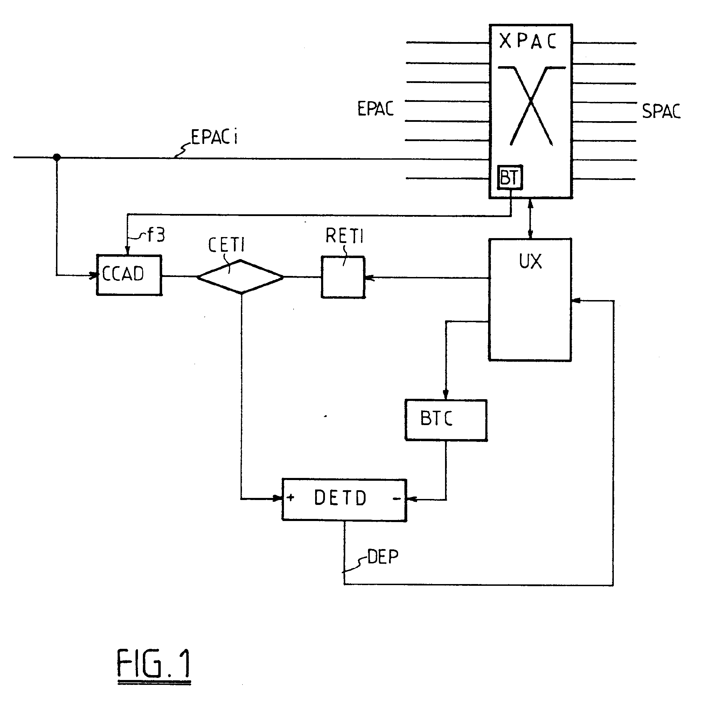

A la Fig. 1, on a représenté un commutateur de paquets XPAC avec ses jonctions d'entrée EPAC, ses jonctions de sortie SPAC et sa base de temps BT. Le commutateur XPAC est contrôlé et commandé par une unité de commande UX qui établit les circuits virtuels entre les jonctions d'entrée et les jonctions de sortie. A titre d'exemple, les jonctions EPAC et SPAC peuvent transmettre des multiplex temporels tels que celui qui est décrit dans le document EP-A-0 108 028 et le commutateur XPAC peut être du type décrit dans le document EP-A-0 113 639, l'unité de commande UX incluant alors l'unité de commande UCC qui fait partie de cet autocommutateur.

En dérivation sur une des jonctions d'entrée EPAC, soit EPACi, est monté un circuit de cadrage CCAD qui est capable de cadrer les paquets portés par la jonction EPACi et d'en extraire les étiquettes. La sortie du circuit CCAD est reliée à la première entrée d'un comparateur CETI dont la second entrée est reliée à la sortie d'un registre RETI dans lequel est mémorisée l'étiquette correspondant à un circuit virtuel à surveiller. Le circuit CCAD est, par exemple, le circuit décrit dans le document EP-A-0 113 307 et il comporte une entrée d'horloge f3 reliée à une sortie correspondante de la base de temps BT du commutateur XPAC. On rappelle que le signal f3 déclenche la sortie, hors du circuit CCAD, du premier octet d'un paquet, c'est-à-dire l'étiquette.

La sortie du comparateur CETI est reliée à l'entrée de comptage + d'un compteur-décompteur DETD de capacité N dont l'entrée de décomptage - est reliée à la sortie d'une base de temps BTC. En pratique, la capacité N sera choisie inférieure à la capacité de stockage dans les files d'attente du commutateur XPAC. En pratique, la capacité de stockage des files d'attente offre au commutateur une souplesse qui lui permet d'absorber les petites surcharges momentanées de trafic. On comprend donc qu'il suffit que N soit inférieur à cette capacité. D'autre part, il ne faut pas choisir N trop petit, car le système ne laisserait même pas passer de petites pointes de trafic.

La sortie de débordement DEP du compteur-décompteur DETD est reliée à une entrée correspondante de l'unité de commande UX, laquelle comporte aussi une sortie reliée à l'entrée d'écriture du registre RETI et une sortie reliée à l'entrée de commande de fréquence de la base de temps BTC. Dans la suite de la description, on admettra que l'unité de commande UX peut modifier la valeur de l'étiquette contenue dans le registre RETI et que la base de temps BTC délivre à l'entrée - du compteur-décompteur DETD des impulsions périodiques IC dont la fréquence est commandée par l'unité de commande UX.

Le circuit montré à la Fig. 1 fonctionne comme suit. L'unité de commande UX a établi une connexion virtuelle entre la jonction EPACi et une des jonctions de sortie SPAC pour une communication dont tous les paquets ont l'étiquette Z. A la suite, par exemple, d'un échange de signalisation avec la source de la communication, elle a établi le débit crête de la communication. L'unité UX écrit alors dans le registre RETI le mot Z et commande, en fonction de ce débit crête, la fréquence de la base de temps BTC. A chaque fois que le comparateur CETI détecte une coïncidence de mots à ses deux entrées, il applique une impulsion IP à l'entrée + du compteur-décompteur DETD.

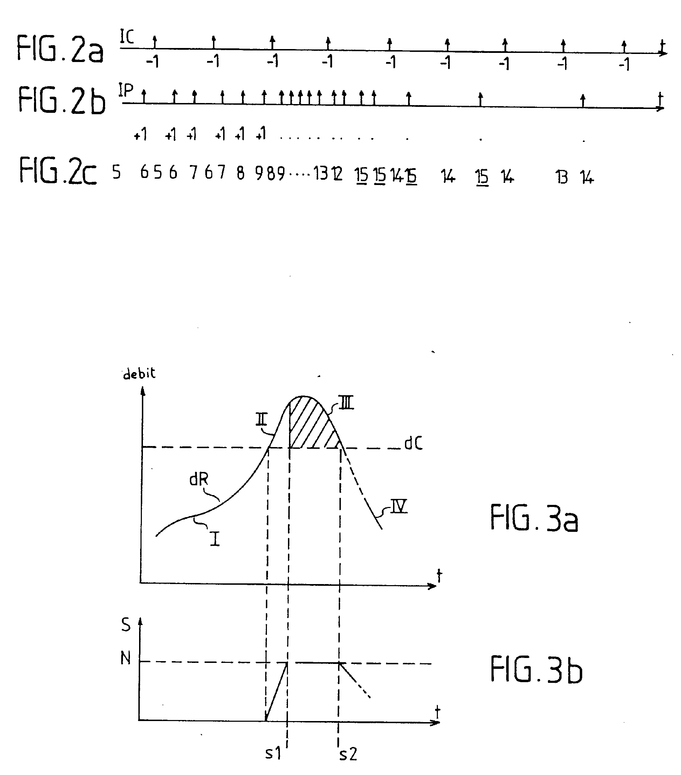

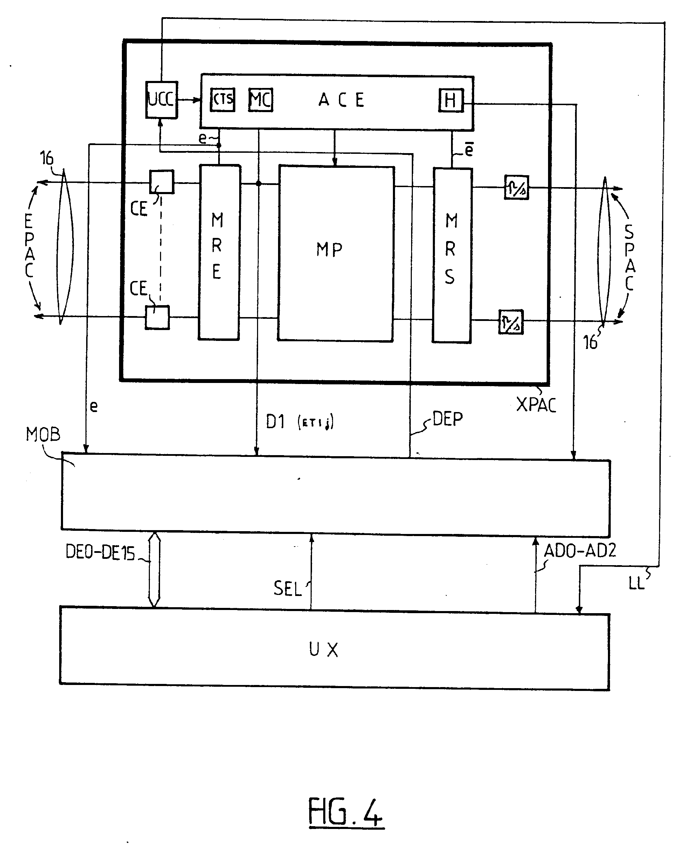

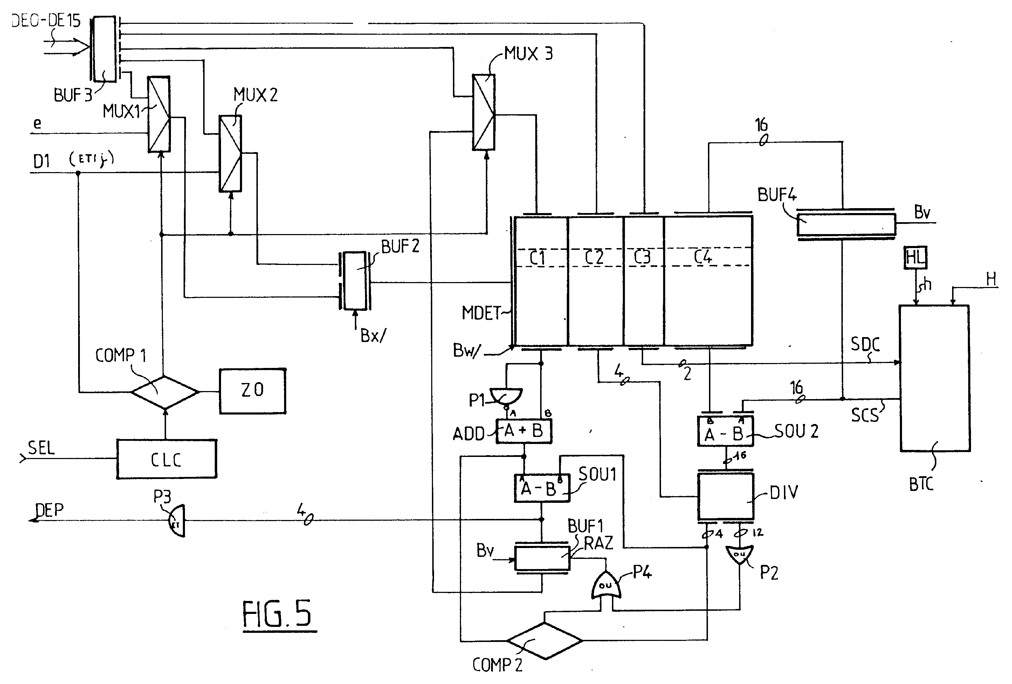

Le diagramme temporel de la Fig. 2a montre les impulsions IC, le diagramme de la Fig. 2b montre les impulsions IP et la Fig. 2c indique les valeurs successives du contenu du compteur-décompteur DETD. A la Fig. 2c, on a supposé que la valeur initiale du contenu était 5 et que la capacité N du compteur-décompteur DETD était égale à $(2^4-1)$. Chaque fois que la valeur de débordement 15 est atteinte le compteur-décompteur DETD transmet un signal DEP à l'unité de commande UX. Suivant l'invention, l'unité UX donne alors l'ordre au commutateur XPAC de détruire les paquets portant l'étiquette Z et provenant de la jonction EPACi. Eventuellement, l'unité UX entre en communication avec la source concernée pour l'informer que des paquets ont été détruits et qu'elle doit réduire son débit pour la communication concernée.

Le diagramme de la Fig. 3a illustre, sous forme analogique, comment le débit de la source concernée évolue au cours du temps, tandis que le diagramme de la Fig. 3b montre comment le contenu du compteur-décompteur DEDT varie en fonction du temps. Il apparaît que tant que le débit de la source dR est inférieur au débit crête dC, comme le montre la partie I de la courbe de la Fig. 3a, le contenu de DETD est à zéro. Pendant la partie II de la courbe, après croisement avec la droite d'ordonnée dC, le contenu du compteur-décompteur DETD passe de 0 à N, c'est-à-dire de 0 à 15, en relation avec les diagrammes des Figs. 2a à 2c. Pendant la partie de courbe III, le compteur-décompteur DETD est bloqué à N=15, ce qui entraîne l'élimination de paquets. Enfin, pendant la partie IV de la courbe, le débit dR redevient inférieur à dC et le contenu du compteur-décompteur redescend vers zéro. Le diagramme de la Fig. 3b montre donc que pendant un certain temps, entre les points s1 et s2, tous les paquets arrivant de la source concernée ont été éliminés. On notera que les diagrammes des Figs 2a à 2c correspondent aux parties de courbes II, III et IV de la Fig. 3a.

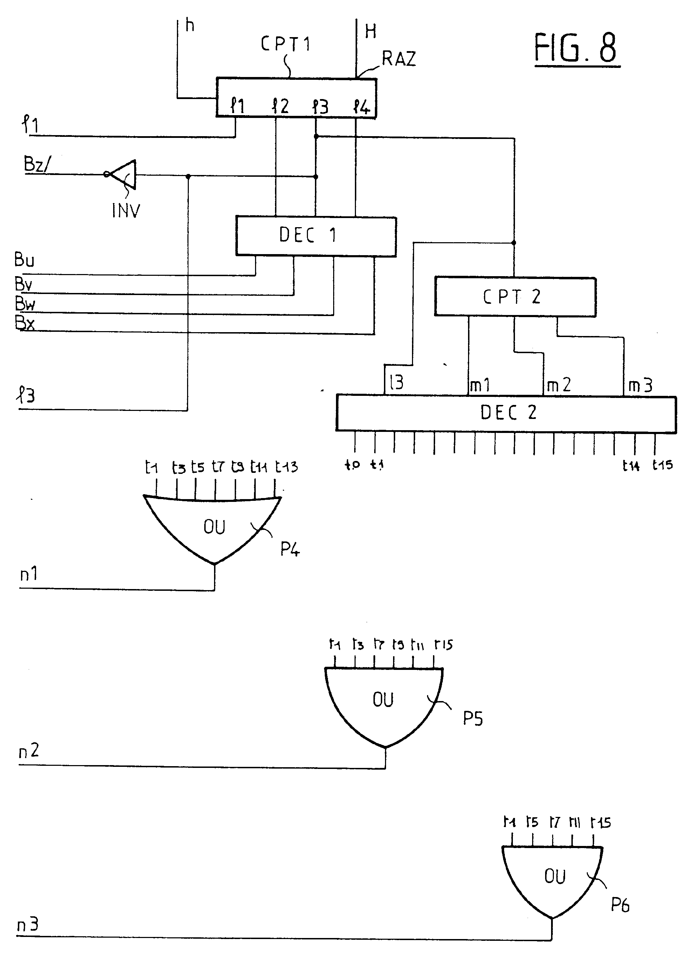

Le circuit de la Fig. 1 a permis de décrire le fonctionnement de base du système de contrôle de flux de paquets suivant l'invention, mais il ne s'applique qu'à une seule communication. En pratique, un système de contrôle réellement efficace doit permettre de contrôler les débits de l'ensemble des multiplex d'entrée EPAC d'un commutateur de paquets et, dans chaque multiplex EPACi, tous les circuits virtuels établis. A titre d'exemple de réalisation de l'invention, il est prévu un module de base capable d'assurer la surveillance de 16 multiplex entrants d'une matrice de commutation telle que celle qui est montrée à la Fig. 8 du document EP-A-0 113 639. Ainsi, il y aura autant de modules de base que de matrices de commutation dans le premier étage d'un commutateur de paquets.

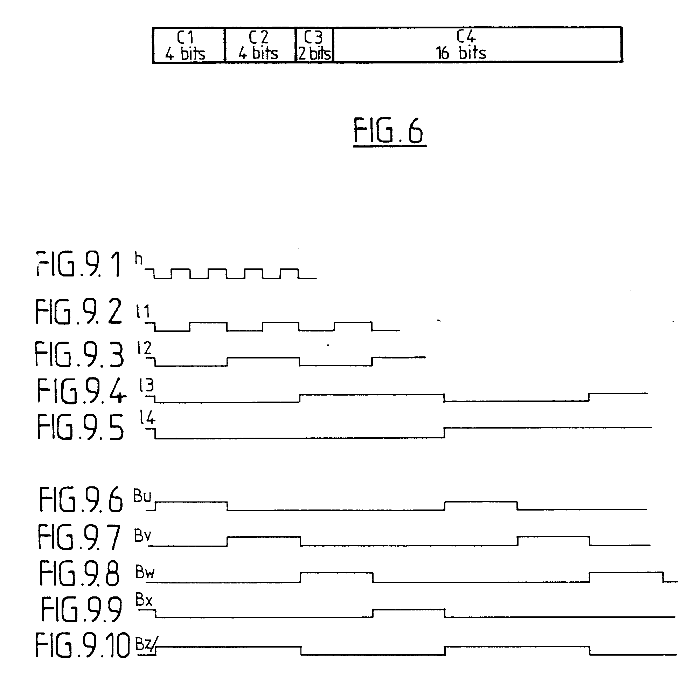

La Fig. 4 montre un module de base MOB associé à une matrice de commutation XPAC à 16 multiplex entrants EPAC et 16 multiplex sortants SPAC, telle que mentionnée ci-dessus, le module de base MOB étant commandé par une unité de commande à processeur UX. Dans la matrice XPAC, on a représenté les circuits d'entrée CE des multiplex entrants EPAC, la matrice de rotation d'entrée MRE, la mémoire tampon de paquets MP, la matrice de rotation de sortie MRS, les circuits de sortie p/s, l'unité de commande centrale UCC, le circuit d'aiguillage ACE incluant la mémoire de conversion d'étiquette MC, la base de temps CTS et l'horloge locale octet H.

Entre la matrice XPAC et le module MOB, on a montré les liaisons D1, e, H et DEP. La liaison D1 sortant de XPAC délivre successivement les différentes étiquettes ETIj des paquets qui entrent dans la matrice XPAC. On rappelle que, suivant le document EP-A-0 113 639, cette liaison D1 est reliée à la première sortie de la matrice de rotation d'entrée MRE qui délivre les étiquettes ETIj à la mémoire MC. La liaison e, provenant de la base de temps CTS, sert à identifier le numéro du multiplex entrant qui porte le paquet dont l'étiquette est ETIj, l'information e portée par cette liaison jouant le même rôle dans la matrice XPAC. La liaison H transmet l'horloge octet interne H utilisée dans la matrice XPAC. La liaison DEP part du module de base MOB vers l'unité UCC qui en déduit l'ordre à trans mettre à la mémoire MC de ne plus traiter une étiquette ETIj particulière provenant d'un multiplex entrant particulier.

Entre le module de base MOB et l'unité de commande UX, sont prévus un bus de données bidirectionnel DE0-DE15 et un fil de demande d'écriture SEL. Le bus DE0-DE15 permet à l'unité de commande UX de transmettre au module de base MOB à la fois des adresses et des données. Quand un commutateur de paquets comprend plusieurs matrices d'entrée, telles que XPAC, on prévoit autant de modules MOB que de matrices, si bien que des fils AD0-AD2 sont nécessaires, à la sortie de l'unité UX, pour sélecter un module parmi huit, par exemple.

Enfin, entre les unités de commande UX et UCC, est prévue une liaison d'échange de données LL par laquelle l'unité de commande UCC transmet à l'unité UX des données concernant le débit crête d'une communication nouvellement établie, laquelle est identifiée par son étiquette ETIj et le multiplex entrant e qui la porte. Ces données seront explicitées ci-dessous.

Le module de base MOB, montré à la Fig. 5, comprend une mémoire MDET, une base de temps BTC, des multiplexeurs d'écriture MUX1 à MUX3, des registres tampons BUF1 à BUF4, un additionneur ADD, deux soustracteurs SOU1 et SOU2, un diviseur DIV, deux comparateurs COMP1 et COMP2, un circuit logique de commande CLC, et des circuits logiques élémentaires tels que des portes P1 à P4.

Comme on le verra par la suite, l'additionneur ADD et le soustracteur SOU1 forment, avec le tampon BUF1, un circuit compteur-décompteur DETD remplissant le même rôle que celui de la Fig. 1.

La mémoire MDET est organisée en K mots. Il y a autant de mots que de connexions possibles à travers la matrice de commutation XPAC, soit ici 4096 ($16 \times 2^8$) mots car cette matrice a 16 multiplex entrants EPAC et traite des paquets dont l'étiquette occupe un octet (huit bits). Ainsi, le mot ETlj d'une étiquette et le mot $\underline{e}$ d'identité du multiplex entrant EPAC définissent ensemble l'adresse complète d'un mot dans la mémoire MDET.

Chaque mot, Fig. 6, de la mémoire MDET est découpé en plusieurs champs C1, C2, C3 et C4.

Le champ C1 est une mémoire à quatre bits servant à enregistrer le contenu mC1 du compteur-décompteur DETD entre deux lectures du mot concerné.

Le champ C2 est une mémoire à quatre bits contenant le rapport de division mC2 $\underline{r}$ du débit crête de référence choisi pour la connexion concernée, ce rapport de division étant utilisé dans le diviseur DIV.

Le champ C3 est une mémoire à 2 bits contenant l'adresse de sélection mC3 d'un compteur annexe parmi les quatre compteurs Cc0 à Cc3 de la base de temps BTC qui délivre le débit crête de référence.

Le champ C4 est une mémoire à seize bits servant à stocker l'état courant mC4 du compteur annexe Cc0 à Cc3 sélecté dans la base de temps BTC.

L'entrée d'adressage de la mémoire MDET est reliée à la sortie du tampon BUF2 dont une entrée est reliée à la sortie du multiplexeur MUX1 et l'autre entrée à la sortie du multiplexeur MUX2. Les premières entrées des multiplexeurs MUX1 et MUX2 sont respectivement reliées aux liaisons $\underline{e}$ et D1, tandis que leurs secondes entrées sont respectivement reliées à des sorties correspondantes du tampon BUF3.

La première entrée du multiplexeur MUX3 est reliée à la sortie du tampon BUF1 et sa seconde entrée à une sortie correspondante du tampon BUF3.

Les entrées de commande des multiplexeurs MUX1, MUX2 et MUX3 sont reliées à la sortie du comparateur COMP1 dont la première entrée est reliée à la liaison D1 et la seconde à la sortie d'un registre Z0 contenant l'octet d'une étiquette de paquet vide, encore appelée étiquette nulle. Le comparateur COMP1 a encore une entrée de validation reliée à la sortie du circuit logique de commande d'écriture CLC. Cette entrée de validation est activée quand l'unité de commande à microprocesseur UX a chargé le tampon BUF3 avec des données d'adressage et des données à écrire dans la mémoire DETD, puis a mis le circuit CLC en état de travail. A noter qu'à l'établissement d'une communication, l'unité UCC transmet, par la liaison LL, à l'unité UX les contenus des champs C2 et C3 du mot de la mémoire MDET qui se trouve à l'adresse ETlj.e identifiant ladite communication.

L'entrée d'écriture correspondant aux champs C1 de la mémoire MDET est reliée à la sortie du multiplexeur MUX3. Les entrées d'écriture des champs C2 et C3 sont respectivement reliées à des sorties correspondantes du tampon BUF3. L'entrée d'acriture des champs C4 est reliée à la sortie du tampon BUF4.

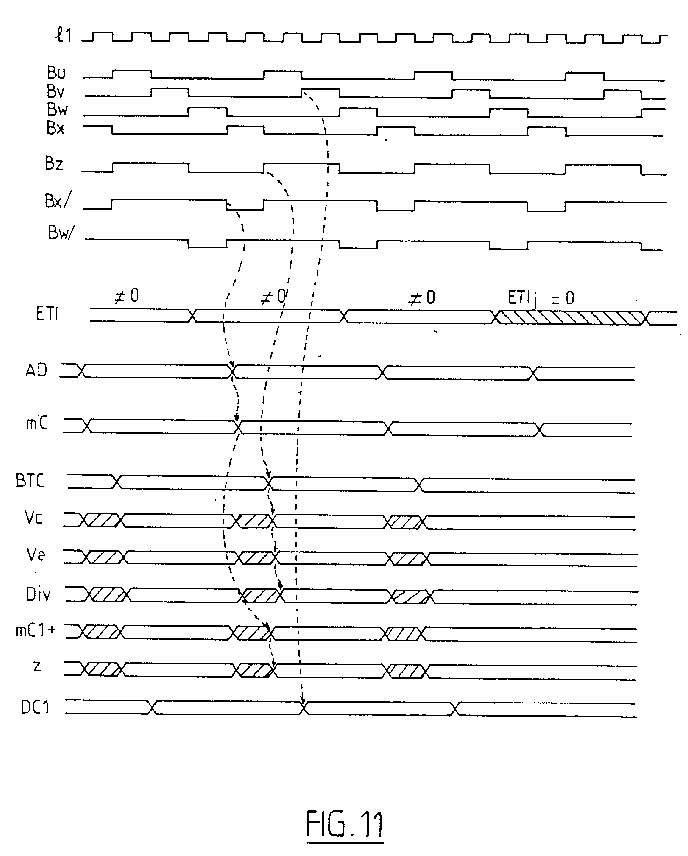

Les quatre fils de lecture des champs C1 sont reliés, d'une part, à l'entrée d'opérande B de l'additioneur ADD et, d'autre part, aux entrées d'une porte NON-ET P1 dont la sortie inversée est reliée à l'entrée d'opérande A de l'additionneur ADD. Ainsi, à chaque lecture d'un mot de la mémoire MDET, l'additionneur ADD ajoute une unité au contenu mC1 du champ C1 correspondant, sauf si ce contenu mC1 est déjà égal à 15 (en notation binaire 1111). Les quatre fils de lecture des champs C2 sont reliés à l'entrée de commande du diviseur DIV. Les deux fils de lecture des champs C3 sont reliés à une entrée de sélection SDC de la base de temps BTC afin d'y effectuer la sélection d'un compteur parmi quatre, comme on le verra dans la suite. Enfin, les seize fils de lecture des champs C4 sont reliés à l'entrée d'opérande B du soustracteur SOU2 dont l'entrée d'opérande A est reliée à la sortie sélectée SCS de la base de temps BTC. Les seize fils de la sortie SCS fournissent le signal Vc, Fig. 11, et sont également reliés à l'entrée du tampon BUF4.

Le soustracteur SOU2 effectue la différence des mots de seize bits Vc et mC4 respectivement appliqués à ses entrées A et B, et délivre un mot différence Ve de seize bits au diviseur DIV. Celui-ci effectue une division de ce mot différence par $2^{mC2}$, ce qui correspond à un décalage de mC2 pas vers la gauche. Parmi les seize fils de sortie du diviseur DIV, les quatre premiers, qui portent les bits de poids faibles formant un mot $\underline{x}$, sont reliés, d'une part, à l'opérande B du soustracteur SOU1 et, d'autre part, à la seconde entrée du comparateur COMP2. Les douze autres fils de sortie du diviseur DIV sont reliés aux douze entrées d'une porte OU P2.

La sortie à quatre fils de l'additionneur ADD est reliée, d'une part, à l'opérande A du soustracteur SOU1 et, d'autre part, à la première entrée du comparateur COMP2. Les quatre fils de sortie du soustracteur SOU1, fournissant le mot $\underline{z}$, Fig. 11, sont reliés, d'une part, aux entrées du tampon BUF1 et, d'autre part, aux entrées d'une porte ET P3 dont la sortie délivre le signal DEP.

La sortie de la porte OU P2 est reliée à une entrée d'une porte OU P4 dont la seconde entrée est reliée à la sortie du comparateur COMP2 et dont la sortie est reliée à l'entrée de remise à zéro RAZ du tampon BUF1.

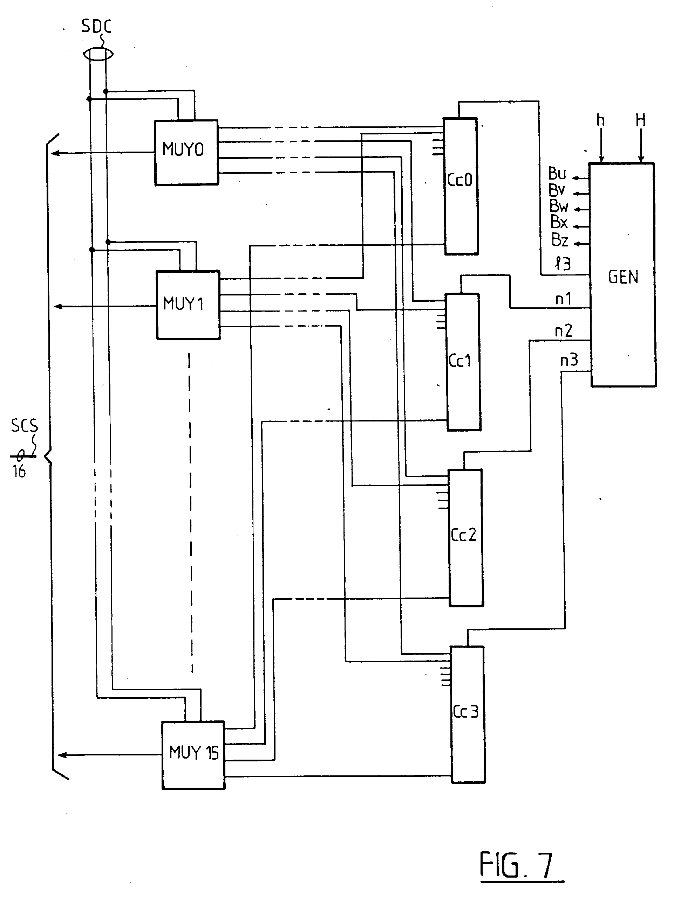

Avant de décrire le fonctionnement du module MOB de la Fig. 5, on va décrire en détail la base de temps BTC dont le bloc-diagramme est présenté à la Fig. 7. La base de temps BTC comprend un générateur d'impulsion GEN, quatre compteurs Cc0 à Cc3 et seize multiplexeurs MUY0 à MUY15.

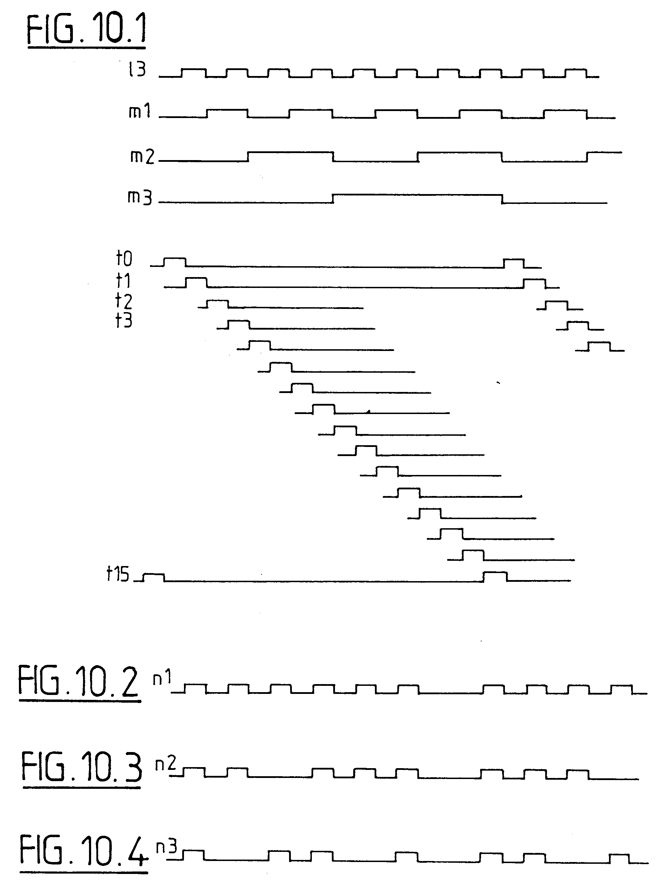

Le générateur d'impulsions GEN, Fig. 8, comprend un compteur binaire CPT1 à quatre étages dont l'entrée de signal reçoit d'une source HL un signal d'horloge locale $\underline{h}$ à la fréquence de 280 Mbit/s et dont l'entrée de remise à zéro RAZ reçoit le signal H ou horloge octet de la matrice XPAC. Les quatre sorties 11 à 14 du compteur CPT1 délivrent les signaux désignés par les mêmes références, dont les fréquences sont 140, 70, 35 et 17,5 Mbit/s, respectivement. Ces signaux h et 11 à 14 sont montrés aux Figs. 9.1 à 9.5. On notera que la période du signal 11 est de 7 ns.

Les sorties 12 à 14 sont reliées aux entrées d'un décodeur DEC1 qui délivre les signaux Bu, Bv, Bw et Bx dont les formes d'onde sont montrés aux Figs. 9.6 à 9.9. En pratique, le décodeur DEC1 est un circuit logique qui résout les équations logiques suivantes:

$$Bu = 12/.13/.14/$$
$$Bv = 12.13/.14$$
$$Bw = 12/.13.14/$$
$$Bx = 12.13.14/$$

On notera que chacun de ces signaux est au niveau haut pendant une période de 11, puis au niveau bas pendant les trois périodes suivantes. Les temps de niveau haut sont décalés d'un signal au suivant.

Le signal 13 est aussi appliqué à un inverseur INV qui délivre un signal Bz/ montré à la Fig. 9.10.

Enfin, le signal 13 est appliqué à l'entrée d'un second compteur binaire CPT2 à trois étages et trois sorties m1 à m3 délivrant des signaux qui sont appliqués, avec le signal 13, à un décodeur DEC2 qui délivre seize signaux t0 à t15 qui sont montrés à la Fig. 10.1. Le décodeur DEC2 résout des équations logiques semblables à celles qui ont été mentionnées plus haut, mais avec quatre termes au lieu de trois à droite. On notera que chacun des signaux t0 à t15 est au niveau haut pendant une demi-période du signal 13, puis reste quinze demi-périodes au niveau bas. Les temps de niveau haut sont décalés d'un signal au suivant. A noter que le signal 13, qui est périodique, correspond à un débit de 35 Mbit/s.

Le générateur GEN comprend encore trois portes OU P4 à P6. La porte OU P4 a sept entrées qui sont respectivement reliées aux sorties t1, t3, t5, t7, t9, t11 et t13 du décodeur DEC2. Sa sortie délivre le signal n1 qui est montré à la Fig. 10.2. On notera que ce signal, qui n'est pas périodique, correspond à un débit moyen de 30,6 Mbit/s avec une période moyenne de 32,7 ns.

La porte OU P5 a six entrées qui sont respectivement reliées aux sorties t1, t3, t7, t9, t11 et t15 du décodeur DEC2. Sa sortie délivre le signal n2 montré à la Fig. 10.3. Ce signal, non périodique, correspond à un débit moyen de 26,2 Mbit/s, avec une période moyenne de 38 ns.

La porte OU P6 a cinq entrées qui sont respectivement reliées aux sorties t1, t5, t7, t11 et t15 du décodeur DEC2. Sa sortie délivre le signal n3 montré à la Fig. 10.4. Ce signal, non périodique, correspond à un débit moyen de 21,87 Mbit/s, avec une période moyenne de 45,7 ns.

Les signaux 13 et n1 à n3 sont respectivement appliqués aux entrées de signal des quatre compteurs binaires Cc0 à Cc3 à seize étages. Chaque multiplexeur MUYi a quatre entrées de signal qui sont respectivement reliées aux sorties d'ordre i des compteurs Cc0 à Cc3. Chaque multiplexeur MUYi a deux fils de commande respectivement reliés aux deux fils de l'entrée de commande de sélection SDC. Ainsi, à la réception d'un mot de sélection à deux bits, l'ensemble formé par les multiplexeurs MUY0 à MUY15 retransmet l'état de l'un des compteurs Cc0 à Cc3. Les sorties des multiplexeurs MUY0 à MUY15 sont reliées à la sortie SCS à seize fils.

En se reportant à nouveau à la Fig. 5, il apparaît qu'à la lecture d'un mot dans la mémoire MDET, les fils SDC sont activés, si bien que le mot de seize bits Vc est délivré à l'opérande A du soustracteur SOU2. Simultanément, la lecture du champ C4 produit le mot de seize bits mC4 appliqué à l'opérande B du soustracteur SOU2, lequel délivre la différence (A-B) sous la forme d'un mot de seize bits Ve au diviseur DIV. Dans le diviseur DIV, la lecture du champ C2 va commander le nombre de décalages mC2 vers la gauche afin que les quatre bits de poids faibles, formant le mot $\underline{x}$, soient utilisés dans le soustracteur SOU1. Enfin, au temps d'écriture dans la mémoire MDET, le contenu du tampon BUF4 va rafraîchir le contenu mC4 du champ C4 en y écrivant le mot fourni par la sortie SCS de la base de temps BTC. On comprend qu'à chaque lecture d'un mot de la mémoire MDET, le soustracteur SOU2 fournit le nombre dont le compteur Cc0 à Cc3 sélecté par SDC a augmenté depuis la lecture précédente. L'utilisation des quatre compteurs Cc0 à Cc3, avec le diviseur DIV, permet une économie de moyens importante. En effet, on aurait pu prévoir de multiplier le nombre des compteurs de la base de temps BTC jusqu'à seize et de supprimer le diviseur. Mais cette solution nécessite de prévoir des multiplexeurs MUYi à plus nombreuses entrées. D'autre part, on peut observer que les signaux n1 à n7, même s'ils ne sont pas rigoureusement périodiques, ne comportent pas de trous importants entre deux impulsions successives. Par contre la multiplication de ces signaux conduirait à admettre des trous très importants.

Il ressort de ce qui précède que les quatre bits de poids faibles du mot de sortie du diviseur DIV représentent le nombre $\underline{x}$ des impulsions IC, en reprenant les notations de la Fig. 2a, qui sont passées depuis la lecture précédente du mot concerné. Or ce mot est lu quand son adresse est transmise par le tampon BUF2 aux entrées d'adressage de la mémoire MDET, c'est-à-dire quand D1 transmet l'étiquette du mot et que $\underline{e}$ identifie le multiplex entrant concerné. La lecture du mot entraîne le transfert du contenu mC1 du champ C1 à quatre bits vers l'opérande B de l'additionneur ADD. Si ce contenu mC1 est inférieur à 15, la porte P1 transmet à l'opérande A un 1 qui représente une impulsion IP de la Fig. 2a. L'additionneur ADD délivre alors la valeur (mC1 + 1). Si le contenu mC1 du champ C1 est déjà égal à 15, la porte P1 délivre un 0 et l'additionneur ADD délivre la valeur de mC1, égale à 15.

Le soustracteur SOU1 soustrait de mC1 ou (mC1 + 1) la valeur $\underline{x}$ et délivre soit (mC1 - x), soit (mC1 + 1 - x). Cette valeur $\underline{z}$ est transmise au tampon BUF1 pour écriture dans la mémoire MDET à la même adresse où elle devient le nouveau contenu mC1 du champ C1. De plus, si cette valeur est égale à 15, la porte ET P3 transmet par sa sortie le signal DEP qui fait supprimer les paquets concernés dans la matrice XPAC, comme on l'a déjà mentionné plus haut.

Par ailleurs, si l'intervalle de temps entre l'arrivée de deux paquets relatifs à la même conversation, c'est-à-dire l'intervalle de temps entre deux lectures du même mot, est très important, il est possible que la valeur du mot de sortie du diviseur DIV soit supérieure à 15. Dans ce cas, la valeur $\underline{x}$ est sans signification, mais comme au moins un des bits de poids forts est à 1, la porte OU P2 transmet, par la porte OU P4, un signal RAZ au tampon BUF1. La nouvelle valeur mC1 écrite dans le champ C1 de la mémoire MDET sera donc 0.

Dans le cas où la valeur appliquée à l'opérande B du soustracteur SOU1 est supérieure à celle appliquée à son opérande A, le soustracteur SOU1 transmet une valeur nulle au tampon BUF1. Si les valeurs appliquées sont égales, le comparateur COMP2 transmet, également par la porte OU P4, un signal RAZ au tampon BUF1.

Il apparaît donc bien que l'ensemble de l'additionneur ADD, du soustracteur SOU1 et du tampon BUF1 remplit le même rôle que le compteur-décompteur DEDT de la Fig. 1.

Les diagrammes temporels de la Fig. 11 illustrent le déroulement de cycles lecture-écriture de la mémoire MDET permettant de réaliser les opérations qui viennent d'être décrites. On y retrouve d'abord les diagrammes des signaux I1, Bu, Bv, Bw, Bx et Bz, dont la génération a été décrite en relation avec les Figs. 8, 9.2 et 9.6 à 9.10. Les diagrammes des signaux Bx/ et Bw/ sont également montrés. Le signal Bx/ est appliqué au tampon BUF2. Le signal Bw/ est appliqué à la commande d'écriture-lecture de la mémoire MDET. Le signal Bv est appliqué aux tampons BUF1 et BUF4.

Le diagramme temporel ETI représente la succession des mots D1, $\underline{e}$ appliqués respectivement aux multiplexeurs MUX1 et MUX2 en provenance de la matrice XPAC. Quand ce mot est différent de celui d'une étiquette nulle, soit de 0 à la Fig. 11, il déclenche un cycle de contrôle de débit et, quand il est égal à celui d'une étiquette nulle, soit 0 à la Fig. 11, il offre à l'unité de commande UX la possibilité d'écrire dans la mémoire MDET.

Le diagramme temporel AD montre les instants auxquels une nouvelle adresse de lecture, déduite soit du mot D1,$\underline{e}$, soit de données fournies par l'unité UX, est validée, par Bx/, dans le tampon BUF2. Le diagramme temporel mC montre les instants auxquels les contenus respectifs mC1 à mC4 des champs C1 à C4 sont ensuite disponibles en lecture vers respectivement l'additionneur ADD, l'entrée de commande du diviseur DIV, l'entrée SDC et l'opérande B du soustracteur SOU2.

Le diagramme temporel BTC montre les instants où les compteurs Cc0 à Cc3 changent d'état dans la base de temps BTC, ces instants étant définis par le signal Bz.

Le diagramme temporel Vc montre les instants où les multiplexeurs MUY0 à MUY15 sont commandés pour présenter la valeur Ve de l'opérande A au soustracteur SOU2. Le diagramme temporel Ve montre les instants de fin de calcul de (A-B) dans ce soustracteur et le diagramme temporel Div les instants de fin de la division dans le diviseur DIV pour présenter l'opérande B au soustracteur SOU1.

Les diagrammes temporels mC1+ et $\underline{z}$ montrent respectivement les instants de fin d'opération dans l'additionneur ADD et de fin de l'opération dans le soustracteur SOU1. Le diagramme temporel DC1 montre les instants de présentation de valeur en sortie des tampons BUF1 et BUF4, commandés par Bv.

Il faut noter que le front montant du signal Bw/ provoque alors l'écriture des valeurs présentes dans BUF1 et BUF4 vers les champs C1 et C4.

Il apparaît donc que l'on décrit un cycle démarrant par l'adressage suivant ETIj et $\underline{e}$, qui permet la lecture des champs C1 à C4, puis l'exécution d'opérations sur les contenus mC1, mC4 et des sélections au moyen des contenus mC2 et mC3, et, enfin, l'écriture des nouvelles valeurs de mC1 et mC4, avant le nouvel adressage qui redéclenche un cycle.

Quand un paquet vide apparaît sur une jonction entrante EPAC, son étiquette est reconnue dans le comparateur COMP1 qui commute les multiplexeurs MUX1 à MUX3 et, d'autre part, inhibe la lecture de la mémoire MDET. Un cycle d'écriture est alors ouvert dans lequel le microprocesseur de l'unité de commande UX fait écrire à une adresse contenue dans le tampon BUF3, les données qui sont également inscrites dans le tampon BUF3. L'homme de métier établirait facilement qu'il a la même durée que le cycle précédemment décrit, c'est pourquoi il a paru inutile de le décrire en détail. Dès qu'une telle mise à jour a eu lieu, l'unité de commande prépare une nouvelle écriture par l'intermédiaire du tampon BUF3 et du circuit CLC réactivé par la liaison SEL.

## Revendications

1) Méthode de contrôle de flux de paquets portés par des multiplex temporels asynchrones (EPACi), les paquets d'une communication étant identifiés par leur étiquette et l'identité du multiplex qui les transporte, caractérisée en ce qu'elle consiste à allouer à chaque communication une fréquence d'horloge prédéterminée et une valeur de seuil prédéterminée (N), à mesurer la différence entre le nombre de paquets entrants appartenant à la communication et le nombre d'impulsions délivrées par ladite horloge, à borner inférieurement cette différence, et, si ladite différence atteint ledit seuil prédéterminé (N), à déclencher une signalisation (DEP) qui provoque l'élimination des paquets appartenant à la communication concernée tant que ladite différence n'est pas redevenue inférieure audit seuil prédéterminé (N).

2) Méthode suivant la revendication 1, caractérisée en ce que la signalisation (DEP) est exploitée par les organes de commandes du commutateur (XPAC) qui émettent vers la source de la communication concernée un message lui demandant de réduire son débit (dR), quand cela est possible, et, en tout état de cause, un message l'avertissant d'une perte de paquets.

3) Système de contrôle de flux de paquets portés par des multiplex temporels asynchrones (EPACi), les paquets d'une communication étant identifiés par leur étiquette et l'identité du multiplex qui les transporte, et destiné à mettre en oeuvre la méthode suivant la revendication 1 ou 2, caractérisé en ce qu'il comporte un compteur-décompteur (DETD) dont l'entrée de décomptage reçoit des impulsions au rythme d'un débit-crête (dC) alloué à la communication concernée et dont l'entrée de comptage reçoit une impulsion à la transmission de chaque paquet appartenant à la communication concernée, le compteur-decompteur étant pourvu d'une sortie de comptage maximal délivrant, quand elle est activée, une signalisation (DEP) vers l'unité de commande (UX).

4) Système suivant la revendication 3, caractérisé en ce que ledit compteur-décompteur se décompose en un premier registre-mémoire (C4), un second registre-mémoire (C1), un additionneur-incrémenteur (ADD), un compteur (Cc0 ou Cc1 ou Cc2 ou Cc3), un premier soustracteur (SOU2), un second soustracteur (SOU1) et un circuit de détection de valeur maximale (P3), l'entrée du compteur (Cc0 à Cc3) recevant des impulsions à un rythme dépendant du débit-crête (dC) alloué à la communication concernée et la sortie du compteur (Cc0 à Cc3) étant reliée, d'une part, à l'entrée de chargement du premier registre-compteur (C4) et d'autre part à la première entrée d'opérande (A) du premier soustracteur (SOU2) dont l'autre entrée d'opérande (B) est reliée à la sortie du premier registre-compteur (C4), l'entrée de l'additionneur-incrémenteur (ADD) étant reliée à la sortie du second registre-mémoire (C1), les sorties de l'additionneur-incrémenteur (ADD) et du premier soustracteur (SOU2) étant reliées aux entrées d'opérande (A, B) du second soustracteur (SOU1) dont la sortie est reliée, d'une part, à l'entrée de chargement du second registre-mémoire (C1) et, d'autre part, à l'entrée du circuit de détection de valeur maximale (P3) dont la sortie délivre ladite signalisation (DEP), chaque transmission d'un paquet appartenant à ladite communication concernée déclenchant le transfert des contenus du compteur (Cc0 à Cc3) et du premier registre-mémoire (C4) aux entrées d'opérande (A, B) du premier soustracteur (SOU2), le transfert du contenu du second registre-mémoire (C1) dans l'additionneur-incrémenteur (ADD), puis le transfert des contenus de l'additionneur-incrémenteur (ADD) et du premier soustracteur (SOU2) aux entrées d'opérande (A, B) du second soustracteur (SOU1), et, enfin, les chargements des premier (C4) et second (C1) registres-mémoires, une fois la seconde soustraction effectuée.

5) Système suivant la revendication 4, caractérisé en ce que ledit compteur-décompteur est associé à un circuit de réception (MUX1, MUX2, BUF2) de l'identité (D1, e) de chaque paquet entrant dans un commutateur (XPAC) de paquets portés par des multiplex temporels asynchrones, à une mémoire (MDET) contenant autant de messages que d'identités de communications établies à travers le commutateur (XPAC), lesdites identités (D1, e) constituant les adresses de ladite mémoire (MDET), chaque message étant formé de plusieurs mots, dont deux (C4, C1) servent des premier et second registres-mémoires dudit compteur-décompteur, une base de temps (BTC) contenant une pluralité de compteurs (Cc0 à Cc3), un sélecteur (MUY0 à MUY15) pour commuter sélectivement une sortie d'un desdits compteurs à la première entrée d'opérande du premier soustracteur (SOU2), chaque message contenant un troisième mot (C3) servant à effectuer ladite sélection.

6) Système suivant la revendication 5, caractérisé en ce que le compteur-décompteur comprend encore un diviseur (DIV) à rapport de division sélectable entre la sortie du premier soustracteur (SOU2) et l'entrée d'opérande (B) correspondante du second soustracteur (SOU1), chaque message de ladite mémoire contenant un quatrième mot (C2) définissant le rapport de division du diviseur.

7) Système suivant la revendication 5 ou 6, caractérisé en ce que le circuit de réception comprend des moyens de reconnaissance (COMP2, Z0) qui sont activés à l'arrivée d'une étiquette de paquet vide pour inhiber l'adressage de la mémoire (MDET) en lecture.

8) Système suivant la revendication 7, caractérisé en ce que lesdits moyens de reconnaissance (COMP2, Z0), quand ils sont activés, déclenchent une autorisation d'accès à la mémoire (MDET) en écriture pour l'unité de commande UX.

8

**Patentansprüche**

1. Verfahren zur Paketflußsteuerung, wobei die Pakete durch asynchrone Zeitmultiplexe (EPACi) getragen sind und die Pakete einer Kommunikation durch ihr Label und die Identität des sie transportierenden Multiplex identifiziert sind, **dadurch gekennzeichnet**, daß jeder Kommunikation eine vorbestimmte Taktfrequenz und ein vorbestimmter Schwellwert (N) zugeordnet werden, daß die Differenz zwischen der Anzahl der eingehenden, zu der Kommunikation gehörenden Pakete und der Anzahl der von dem Takt gelieferten Impulse gemessen wird, daß diese Differenz nach unten begrenzt wird und dann, wenn diese Differenz den Schwellwert (N) erreicht, eine Signalisierung (DEP) ausgelöst wird, die die Beseitigung von zu der betroffenen Kommunikation gehörenden Paketen auslöst, solange die Differenz nicht unterhalb des vorbestimmten Schwellwertes (N) abfällt.

2. Verfahren nach Anspruch 1, **dadurch gekennzeichnet**, daß die Signalisierung (DEP) durch die Steuerorgane des Kommutators (XPAC) bewirkt wird, den zu der quelle der betroffenen Kommunikation eine Nachricht, die sie auffordert, ihre Abgabe (dR) zu verringern, wenn dies möglich ist, und in jedem Fall eine den Verlust von Paketen anzeigende Nachricht aussendet.

3. System zur Paketsteuerung, wobei die Pakete durch asynchrone Zeitmultiplexe (EPACi) bestimmt sind und die Pakete einer Kommunikation durch ihr Label und die Identität des sie transportierenden Multiplex identifiziert sind, zur Durchführung des Verfahrens nach Anspruch 1 oder 2, **dadurch gekennzeichnet**, daß es einen Zähler/Rückzähler (DETD) enthält, dessen Rückzähleingang die Impulse im Rhythmus eines der betroffenen Kommunikation zugeordneten Spitzenausgangs (dC) und dessen Zähleingang einen Impuls bei der Übertragung jedes zu einer betroffenen Kommunikation gehörenden Paketes empfängt, wobei der Zähler/Rückzähler mit einem Ausgang für das maximale Zählergebnis versehen ist der, wenn er aktiviert wird, eine Signalisierung (DEP) an die Steuereinheit (UX) liefert.

4. System an Anspruch 3, **dadurch gekennzeichnet**, daß der Zähler/Rückzähler einen ersten Register-Speicher (C4), einen zweiten Register-Speicher (C1), einen Addierer-Inkrementer (ADD), einen Zähler (Cc0 oder Cc1 oder Cc2 oder Cc3), einen ersten Subtrahierer (SOU2), einen zweiten Subtrahierer (SOU1) und eine Detektionsschaltung (P3) für den Maximalwert enthält, daß der Eingang des Zählers (Cc0 bis Cc3) Impulse in einem Rhythmus empfängt, der von dem der betroffenen Kommunikation zugeordneten Spitzenausgang (dC) abhängig ist, daß der Ausgang des Zählers (Cc0 bis Cc3) einerseits mit dem Ladeeingang des ersten Register-Zählers (C4) und andererseits mit dem ersten Operationseingang (A) des ersten Subtrahierers (SOU2) verbunden ist, dessen anderer Operationseingang (B) mit dem Ausgang des ersten Register-Zählers (C4) verbunden ist, daß der Eingang des Addierer-Inkrementers (ADD) mit dem Ausgang des zweiten Register-Speichers (C1) verbunden ist, daß die Ausgänge des Addierer-Inkrementers (ADD) und des ersten Subtrahierers (SOU2) mit den Operationseingängen (A, B) des zweiten Subtrahierers verbunden sind, dessen Ausgang einerseits mit dem Ladeeingang des zweiten Register-Speichers (C1) und andererseits mit dem Eingang der Detektionsschaltung (P3) für den Maximalwert verbunden ist, dessen Ausgang die genannte Signalisierung (DEP) liefert, daß jede Übertragung eines zu der genannten betroffenen Kommunikation gehörenden Paketes die Übertragung der Inhalte des Zählers (Cc0 bis Cc3) und des ersten Register-Speichers (C4) zu den Operationseingängen (A, B) des ersten Subtrahierers (SOU2), die Übertragung des Inhaltes des zweiten Register-Speichers (C1) in dem Addierer-Inkrementer (ADD), dann die Übertragung der Inhalte des Addierer-Inkrementers (ADD) und des ersten Subtrahierers (SOU2) zu den Operationseingängen (A, B) des zweiten Subtrahierers (SOU1) und schließlich die Ladungen des ersten (C4) und des zweiten (C1) Register-Speichers auslöst, wenn die zweite Subtraktion einmal erfolgt ist.

5. System nach Anspruch 4, **dadurch gekennzeichnet**, daß dem Zähler/Rückzähler zugeordnet sind eine Empfangsschaltung (MUX1, MUX2, BUF2) für das Label (D1,e) jedes Paketes, das in einem Kommutator (XPAC) für die durch die asynchronen Zeitmultiplexe getragenen Pakete zu einem Speicher (MDET) ankommt, der ebenso viele Nachrichten wie Indentitäten der über den Kommuntator (XPAC) gebildeten Kommunikationen enthält, daß die genannten Identitäten (D1,e) die Adressen des Speichers (MDET) bilden, daß jede Nachricht aus mehreren Wörtern besteht, von denen zwei (C4, C1) als erste und Zweite Register-Speicher des Zählers/Rückzählers dienen, sowie eine Zeitbasis (BTC), die eine Vielzahl von Zählern (Cc0 bis Cc3) enthält, und ein Selektor (MUY0 bis MUY15), um selektiv einen Ausgang eines der Zähler an dem ersten Operationseingang des ersten Subtrahierers (SOU2) auszuwählen, daß jede Nachricht ein drittes Wort (C3) enthält, das dazu dient, die genannte Selektion zu bewirken.

6. System nach Anspruch 5, **dadurch gekennzeichnet**, daß der Zähler/Rückzähler noch einen Teiler (DIV) enthält für eine selektive Teilung zwischen dem Ausgang des ersten Subtrahierers (SOU2) und dem entsprechenden Operationseingang (B2) des zweiten Subtrahierers (SOU1), daß jede Nachricht des Speichers ein viertes Wort (C2) enthält, das das Teilerverhältnis des Teilers bestimmt.

7. System nach Anspruch 5 oder 6, **dadurch gekennzeichnet**, daß die Empfangsschaltung Erkennungsmittel (COMP2, Z0) enthält, die beim Eingang eines leeren Paket-Labels aktiviert werden, um die Adressierung des Speichers (MDET) für den Lesevorgang zu sperren.

8. System nach Anspruch 7, **dadurch gekennzeichnet**, daß die Erkennungsmittel (COMP2,Z0), wenn sie aktiviert sind, eine Zugriffsberechtigung zu dem Speicher (MDET) zum Schreiben für die Steuereinheit (UX) auslösen.

**Claims**

1. A method of control of flows of packets carried by asynchronous time multiplexes (EPACi), the packets of a communication being identified by their label and the identity of the multiplex which transports them, characterised in that it consists of allocating to each communication a predetermined clock frequency and a predetermined threshold value (N), measuring the difference between the number of incoming packets belonging to the communication and the number of impulses delivered by the said clock, limiting in a lower position this difference and if the said difference reaches the said predetermined threshold (N), starting a signalling (DEP) which causes the elimination of the packets belonging to the communication concerned as long as the said difference has not become again below the said predetermined threshold (N).

2. A method according to claim 1, characterised in that the signalling (DEP) is exploited by the control members of the commutator (XPAC) which emit towards the source of the communication concerned a message requiring it to reduce its output (dR) when that is possible and in any case a message notifying him of a loss of packets.

3. A system of control of flows of packets carried by asynchronous time multiplexes (EPACi), the packets of a communication being identified by their label and the identity of the multiplex which transports them and intended to implement the method according to claim 1 or 2, characterised in that it comprises a counter-deducter (DETD) the deducting input of which receives impulses at the rhythm of a peak output (dC) allocated to the communication concerned and the counting input of which receives an impulse on transmission of each packet belonging to the communication concerned, the counter-deducter being provided with a maximum counting output delivering, when it is activated, a signalling (DEP) towards the control unit (UX).

4. A system according to claim 3, characterised in that the said counter-deducter decomposes into a first register memory (C4), a second register memory (C1), an adder-incrementer (ADD), a counter (Cc0 or Cc1 or Cc2 or Cc3), a first subtracter (SOU2), a second subtracter (SOU1) and a detection of maximum value circuit (P3), the counter input (Cc0 to Cc3) receiving impulses at a rhythm depending on the peak output (dC) allocated to the communication concerned and the output of the counter (Cc9 to Cc3) being connected on the one hand, to the charging input of the first register-counter (C4) and on the other hand, to the first operand input (A) of the first subtracter (SOU2) the other operand input (B) of which is connected to the output of the first register. Counter (C4), the adder-incrementer (ADD) input being connected to the output of the second register memory (C1), the outputs of the adder-incrementer (ADD) and of the first substracter (SOU2) being connected to the operand inputs (A,B) of the second subtracter (SOU1) the output of which is connected, on the one hand, to the charging input of the second register memory (C1) and on the other hand, to the detection of maximum value circuit (P3) the output of which delivers the said signalling (DEP), each transmission of a packet belonging to the said communication concerned starting the transfer of the contents of the counter (Cc0 to Cc3) and of the first register memory (C4) to the operand inputs (A,B) of the first subtracter (SOU2), the transfer of the contents of the second register-memory (C1) in the adder-incrementer (ADD) then the transfer of the contents of the adder-incrementer (ADD) and of the first substracter (SOU2) to the operand inputs (A,B) of the second subtracter (SOU1) and finally, the chargings of the first (C4) and second (C1) register memories once the second subtraction is effected.

5. A system according to claim 4, characterised in that the said counter-deducter is associated with a reception circuit (MUX1, MUX2, BUF2) of the identity (D1, e) of each incoming packet in a commutator (XPAC) of packets carried by asynchronous time multiplexes to a memory (MDET) containing as many messages as identities of communications established through the commutator (XPAC), the said identities (D1, e) constituting the addresses of the said memory (MDET), each message being formed by several words, two (C4, C1) of which serve as first and second register memories of the said counter-deducter, a time base (BTC) containing a plurality of counters (Cc0 to Cc3), a selector (MUY0 to MUY15) to commutate selectively an output of one of the said counters at the first operand input of the first subtracter (SOU2), each message containing a third word (C3) serving to effect the said selection.

6. A system according to claim 5, characterised in that the counter-deducter comprises again a divider (DIV) in respect of selectable division between the output of the first subtracter (SOU2) and the corresponding operand input (B) of the second subtracter (SOU1), each message of the said memory containing a fourth word (C2) defining the division ratio of the divider.

7. A system according to claim 5 or 6, character-

**EP 0 293 315 B1**

ised in that the reception circuit comprises recognition means (COMP2, z0) which are activated on arrival of an empty packet label in order to inhibit the addressing of the memory (MDET) in reading.

8. A system according to claim 7, characterised in that the said recognition means (COMP2, z0), when they are activated, start an authorisation of access to the memory (MDET) in writing for the control unit UX.

FIG.1

FIG.2a $\underline{\text{IC}}$

FIG.2b $\underline{\text{IP}}$

+1  +1  +1  +1  +1  +1  . . . . . . . .  .  .  .

FIG.2c  5  6 5 6  7 6 7  8  9 8 9 ···· 13 12  15 15 14 15  14  15 14  13 14

debit

dC

dR

I

II

III

IV

t

FIG.3a

S

N

s1  s2

t

FIG.3b

FIG.4

FIG.5

| C1<br>4 bits | C2<br>4 bits | C3<br>2 bits | C4<br>16 bits |
|---|---|---|---|

## FIG.6

FIG.9.1 h

FIG.9.2 I1

FIG.9.3 I2

FIG.9.4 I3

FIG.9.5 I4

FIG.9.6 Bu

FIG.9.7 Bv

FIG.9.8 Bw

FIG.9.9 Bx

FIG.9.10 Bz

FIG. 7

FIG. 8

FIG. 10.1

l3

m1

m2

m3

t0

t1

t2

t3

t15

FIG. 10.2  n1

FIG. 10.3  n2

FIG. 10.4  n3

FIG.11